**Europäisches Patentamt**

**European Patent Office**

**Office européen des brevets**

(19)

(11) Veröffentlichungsnummer: **0 216 333**
**A1**

(12) **EUROPÄISCHE PATENTANMELDUNG**

(21) Anmeldenummer: **86112975.7**

(22) Anmeldetag: **19.09.86**

(51) Int. Cl.⁴: **G 01 G 13/02**
**B 65 G 47/58**

(30) Priorität: **20.09.85 DE 8526919 U**

(43) Veröffentlichungstag der Anmeldung:
**01.04.87 Patentblatt 87/14**

(84) Benannte Vertragsstaaten:
**AT BE CH DE FR GB IT LI LU NL SE**

(71) Anmelder: **Affeldt Verpackungsmaschinen GmbH**
**Altendeich 14**
**D-2200 Neuendorf/Elmshorn(DE)**

(72) Erfinder: **Affeldt, Jörn**
**Kirchdorf 10**
**D-2200 Neuendorf(DE)**

(74) Vertreter: **Struck, Willi, Dr.-Ing.**
**Friedrich-Ebert-Strasse 10f**
**D-2080 Pinneberg(DE)**

(54) Verteilerband für Wiege- oder Zählvorrichtungen, insbes. für Obst, Gemüse und dergl.

㊵7 Die Erfindung betrifft eine Wiege- oder Zählvorrichtung (11) für stückiges Gut (16), insbesondere für Obst, Gemüse und dergleichen, bei der das Gut (16) von einem Vorratsbehälter (17) über eine Vielzahl von Führungsrinnen (12) oder -bändern den Wiege- oder Zählvorrichtungen (13) zugeführt wird und bezweckt bei Anlagen mit einer Vielzahl von nebeneinanderliegenden Rinnen (12), alle Rinnen vornehmlich auch die äußeren Rinnen gleichmäßig mit dem Gut (16) aus einem einzigen großen Vorratsbehälter (17) beschicken zu können. Erfindungsgemäß wird dazu vorgeschlagen zwischen dem Vorratsbehälter (17) und den Führungsrinnen (12) ein quer zur Richtung der Führungsrinnen (12) umlaufendes Verteilerband (15) anzuordnen.

Fig. 2

EP 0 216 333 A1

Die Neuerung betrifft eine Wiege- oder Zählvorrichtung für
stückiges Gut, insbes. für Obst, Gemüse und dergl., bei der
das Gut von einem Vorratsbehälter über eine Vielzahl von Führungsrinnen oder -bändern den Wiege- oder Zählvorrichtungen
zugeführt wird.

Wiege- und/oder Zählvorrichtungen dieser Art sind bekannt und
im großen Umfang in Gebrauch. Beim Betrieb dieser Vorrichtungen
hat es sich nun gezeigt, daß es insbesondere bei breiteren
Anlagen mit einer Vielzahl von nebeneinanderliegenden Rinnen
schwierig ist alle Rinnen, vornehmlich die äußeren Rinnen gleichmäßig mit dem Gut aus einem einzigen großen Vorratsbehälter
zu beschicken.

Durch die vorliegende Neuerung soll dieser Mangel beseitigt
und die Aufgabe gelöst werden, zu verhindern, daß die Wiege-
oder Zählvorrichtung nicht optimal ausgenutzt werden kann,
weil durch einzelne Rinnen kein oder zu wenig Gut den Zähl-
oder Wiegevorrichtungen zugeführt wird.

Zur Lösung der gestellten Aufgabe wird neuerungsgemäß bei
einer Vorrichtung der eingangs genannten Art vorgeschlagen,
zwischen dem Vorratsbehälter und den Führungsrinnen ein quer
zur Richtung der Führungsrinnen umlaufendes Verteilerband anzuordnen.

Im Bereich der am weitesten nach außen liegenden Führungsrinnen sollen dabei am Verteilerband vorzugsweise Abweiser vorgesehen sein, durch die das Gut den Führungsrinnen sicher zugeführt wird und Stauungen auf dem Verteilerband an dessen Enden
vermieden werden. Damit die äußeren Führungsrinnen an beiden
Seiten der Wiege- oder Zählvorrichtung gut beschickt werden
können, soll das Verteilerband mit einem Antrieb versehen
sein, dessen Laufrichtung umkehrbar ist, so daß das Verteilerband sowohl in der einem als auch in der entgegengesetzten
Richtung umlaufen kann.

Zur Steuerung der Laufrichtung des Verteilerbandes sollen an
den Führungsrinnen, insbesondere an den außenliegenden Rinnen, die Füllung der Rinnen überwachende und über diese die
Laufrichtung des Verteilerbandes steuernde Sensoren wie z.B.
Fotozellen angeordnet sein.

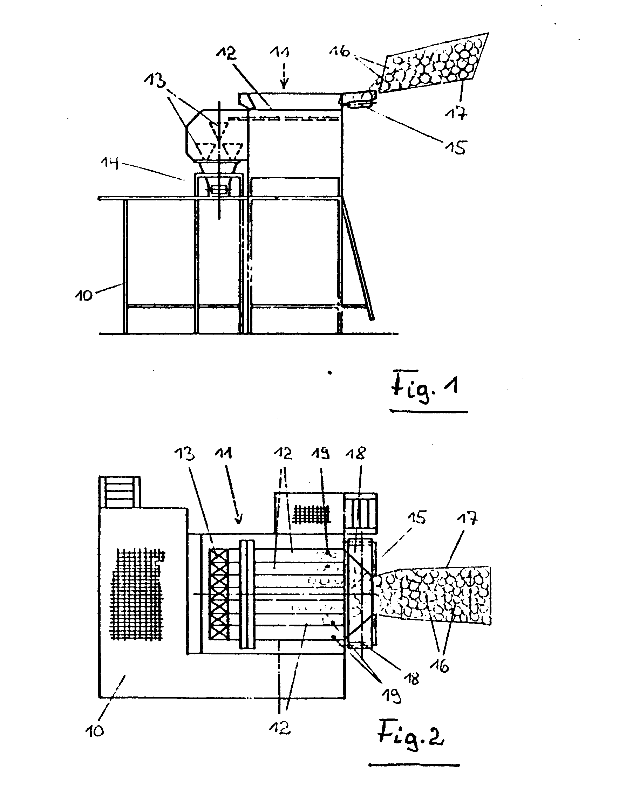

An Hand der beiliegenden Zeichnung soll die Neuerung nachfolgend noch weiter erläutert werden. Auf der Zeichnung zeigen
Fig. 1 eine Seitenansicht einer Zähl- oder Wiegeeinrichtung
       nach der Neuerung und
Fig. 2 eine Ansicht von oben auf diese Vorrichtung.

In den Figuren sind gleiche Teile mit gleichen Bezugzeichen
versehen.

Auf einem Gestell 10 ist, wie man aus den Figuren erkennen
kann, eine insgesamt mit 11 gekennzeichnete Zähl- oder Wiegevorrichtung angebracht, die im Einzelnen aus Führungsrinnen 12

0216333

für das Gut und den hinter diesen angeordneten eigentlichen
Zähl- oder Wiegeeinrichtungen 13 und einem unterhalb diesen
laufenden Abführförderband 14 besteht.

Vor den Führungsrinnen 12 befindet sich nun das neuerungsgemäße Verteilerband 15, auf welches das Gut 16 aus einem Vorratsbehälter 17 aufgegeben wird. Man erkennt an den beiden
Außenseiten des Verteilerbandes 15 Abweiser 18, durch die das
Gut in die Führungsrinnen 12 abgeleitet wird, so daß an diesen
Stellen des Verteilerbandes Stauungen vermieden werden.

Das aus dem Vorratsbehälter 17 auf das Verteilerband 15 gelangende Gut wird von diesem entweder in der einen oder in
der entgegengesetzten Richtung quer zu dem Führungsrinnen 12
gefördert, so daß es nicht nur in die in der Mitte der Vorrichtung liegenden Rinnen eintreten kann, sondern auch zu den
außenliegenden Rinnen 12 geführt wird. Damit hier der Übertritt in die Rinnen erleichtert wird, befinden sich dort Abweiser 18 mit schräg zu den Rinnen weisenden Abweisflächen.

Um zu erreichen, daß die Führungsrinnen 12 auch an beiden
Seiten der Zähl- und Wiegevorrichtung immer ausreichend beschickt werden, wird hier die Füllung der Rinnen durch Fotozellen 19 überwacht und über die Füllung die Laufrichtung
des Verteilerbandes 15 in an sich bekannter Wiese gesteuert.

PATENTANWALT

DR.-ING. WILLI STRUCK  -1-

PINNEBERG / HOLST.

FRIEDRICH-EBERT-STR. 10 f

Patentanwalt Dr. W. Struck
2080 Pinneberg/Holst.   Postfach 2067

0216333

Verteilerband für Wiege- oder Zählvorrichtungen,
insbes. für Obst, Gemüse und dergl.

Anm.: Fa. Affeldt Verpackungsmaschinen GmbH,
2200 Neuendorf b. Elmshorn

## Schutzansprüche

1. Wiege- oder Zählvorrichtung für stückiges Gut, insbes.
   Obst, Gemüse und dergl. bei der das Gut von einem Vorratsbehälter über eine Vielzahl von Führungsrinnen oder -bändern
   den Wiege- oder Zählvorrichtungen zugeführt wird, dadurch
   gekennzeichnet, daß zwischen dem Vorratsbehälter (17) und
   den Führungsrinnen (12) ein quer zur Richtung der Führungsrinnen umlaufendes Verteilerband (15) angeordnet ist.

2. Wiege- oder Zählvorrichtung nach Anspruch 1, dadurch gekennzeichnet, daß im Bereich der äußeren Führungsrinnen

- 2 -

(12), am Verteilerband (15) Abweiser (18) vorgesehen sind.

3. Wiege- oder Zählvorrichtung nach Anspruch 1 und 2, dadurch gekennzeichnet, daß das Verteilerband (15) mit einem Antrieb mit umkehrbarer Laufrichtung verbunden ist.

4. Wiege- oder Zählvorrichtung nach Anspruch 1 bis 3, dadurch gekennzeichnet, daß an den Führungsrinnen (12) die Füllung der Rinnen überwachende mit einer Steuerung für die Laufrichtung des Antriebes verbundene Sensoren (19) angeordnet sind.

5. Wiege- oder Zählvorrichtung nach Anspruch 4, dadurch gekennzeichnet, daß die Sensoren Fotozellen (19) sind.

Fig. 1

Fig. 2

**Europäisches Patentamt**

# EUROPÄISCHER RECHERCHENBERICHT

**0216333**

Nummer der Anmeldung

| | EINSCHLÄGIGE DOKUMENTE | | EP 86112975.7 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US - A - 3 720 276 (BANKS) <br> * Fig. 1; Spalte 3, Zeilen 7-30 * <br> -- | 1-5 | G 01 G 13/02 <br> B 65 G 47/58 |
| Y | DD - A1 - 220 569 (VEB INGENIEUR-BURO) <br> * Fig. 1,2; Seite 4 * <br> -- | 1-5 | |
| A | US - A - 4 010 809 (HOBART) <br> * Fig. 1,4; Spalte 3, Zeile 1 - Spalte 5, Zeile 40 * <br> ---- | 1 | |

| RECHERCHIERTE SACHGEBIETE (Int. Cl.4) |
|---|
| G 01 G 11/00 <br> G 01 G 13/00 <br> G 01 G 23/00 |

Der vorliegende Recherchenbericht wurde für alle Patentansprüche erstellt.

| Recherchenort | Abschlußdatum der Recherche | Prüfer |
|---|---|---|
| WIEN | 26-11-1986 | BURGHARDT |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82